# FASCICULE DE BREVET EUROPEEN

(11) **EP 3 042 410 B1**
(45) Date de publication et mention de la délivrance du brevet: **03.01.2018**
(21) Numéro de dépôt: 14790137.5
(22) Date de dépôt: 17.07.2014
(51) Int. Cl.: H01M 4/62, H01M 10/0525, H01M 4/13

(54) **ADDITIFS POUR AMÉLIORER LA CONDUCTIVITÉ IONIQUE DES ÉLECTRODES DE BATTERIES LITHIUM-ION**
ADDITIVE ZUR VERBESSERUNG DER IONENLEITFÄHIGKEIT VON LITHIUM-IONEN-BATTERIE-ELEKTRODEN
ADDITIVES FOR IMPROVING THE IONIC CONDUCTIVITY OF LITHIUM-ION BATTERY ELECTRODES

(30) Priorité: 05.09.2013 FR 1358485
(43) Date de publication de la demande: 13.07.2016
(73) Titulaire: Arkema France, 92700 Colombes (FR)
(72) Inventeur: SCHMIDT, Grégory, 69700 Saint Andéol de Château (FR)
(74) Mandataire: Chahine, Audrey Claire
(86) Numéro de dépôt international: PCT/FR2014/051833
(87) Numéro de publication internationale: WO 2015/033038

(56) Documents cités:
- FR-A1- 2 935 382
- FR-A1- 2 983 467
- US-A1- 2003 094 599
- US-A1- 2007 048 619
- US-A1- 2008 206 647
- US-A1- 2009 017 378
- US-A1- 2009 286 163

## Description

### DOMAINE DE L'INVENTION

La présente invention a trait de manière générale au domaine du stockage d'énergie électrique dans des batteries secondaire lithium de type Li-ion. Plus précisément, l'invention se rapporte à un matériau d'électrode de batterie Li-ion, sa méthode de préparation et son utilisation en batterie Li-ion. L'invention a aussi pour objet les batteries Li-ion fabriquées en incorporant ce matériau d'électrode.

### ARRIERE-PLAN TECHNIQUE

Une cellule élémentaire d'une batterie secondaire Li-ion ou accumulateur au lithium comporte une anode (à la décharge), généralement en lithium métallique ou à base de carbone, et une cathode (idem : à la décharge), généralement en un composé d'insertion du lithium de type oxyde métallique tel que LiMn₂O₄ LiCoO₂ ou LiNiO₂, entre lesquelles se trouve intercalé un électrolyte conducteur des ions lithium.

En cas d'utilisation, donc lors de la décharge de la batterie, le lithium relâché par oxydation au pôle (-) par l'anode sous forme ionique Li⁺, migre à travers l'électrolyte conducteur et vient s'insérer par une réaction de réduction dans le réseau cristallin du matériau actif de la cathode pôle (+). Le passage de chaque ion Li⁺ dans le circuit interne de l'accumulateur est exactement compensé par le passage d'un électron dans le circuit externe, générant un courant électrique qui peut servir à alimenter divers appareils dans le domaine de l'électronique portable tels que des ordinateurs ou téléphones, ou dans le domaine des applications de plus grande densité de puissance et d'énergie, tels que les véhicules électriques.

Lors de la charge, les réactions électrochimiques sont inversées, les ions lithium sont libérés par oxydation au pôle (+), « cathode » (la cathode à la décharge devient l'anode à la recharge), ils migrent à travers l'électrolyte conducteur dans le sens inverse de celui dans lequel ils circulaient lors de la décharge, et viennent se déposer ou s'intercaler par réduction au pôle (-), «anode » (de même l'anode à la décharge devient la cathode à la recharge) où ils peuvent former des dendrites de lithium métallique, causes possibles de courts-circuits.

Une cathode ou une anode comprennent généralement au moins un collecteur de courant sur lequel est déposé un matériau composite qui est constitué par : un ou plusieurs matériaux dits actifs car ils présentent une activité électrochimique vis-à-vis du lithium, un ou plusieurs polymères qui jouent le rôle de liant et qui sont généralement des polymères fluorés fonctionnalisés ou non comme le poly difluorovinyle ou des polymères à base aqueuse, de type Carboxyméthylcellulose ou des latex styrène-butadiène, plus un ou plusieurs additifs conducteurs électroniques qui sont généralement des formes allotropiques du carbone.

Les matériaux actifs classiques à l'électrode négative sont généralement le lithium métal, le graphite, les composites silicium/carbone, le silicium, les graphites fluorés de type CFₓ avec x compris entre 0 et 1 et les titanates type LiTi₅O₁₂.

Les matériaux actifs classiques à l'électrode positive sont généralement du type LiMO₂, du type LiMPO₄, du type Li₂MPO₃F, du type Li₂MSiO₄ où M est Co, Ni, Mn, Fe ou une combinaison de ces derniers, du type LiMn₂O₄ ou du type S₈.

Récemment, des additifs permettant d'améliorer la perméabilité de l'électrolyte au coeur de l'électrode ont été utilisés. Du fait de la demande croissante en batterie haute énergie c'est-à-dire avec des capacités de stockage électrique plus élevées, l'épaisseur des électrodes augmente et donc la perméabilité de l'électrolyte devient importante dans la résistance globale de la batterie. Dans le but d'améliorer cette perméabilité, le brevet WO2005/011044 décrit l'ajout de charge dite minérale d'oxyde de métaux tels qu'Al₂O₃ et SiO₂.

Ces charges minérales sont ajoutées au cours du procédé classique de fabrication des électrodes. Ce procédé classique consiste à mélanger les différents constituants dans un solvant ou un mélange de solvants comme par exemple la N-méthylpyrrolidone, l'acétone, l'eau ou l'éthylène carbonate:
a) au moins un additif conducteur à un taux allant de 1 à 5% en poids, de préférence de 1,5 à 4% ou 1 à 2,5% en poids, de préférence de 1,5 à 2,2% en poids par rapport au poids total du matériau composite ;
b) un oxyde, un phosphate, un fluorophosphate ou un silicate de lithium comme matériau actif d'électrode capable de former de façon réversible un composé d'insertion avec le lithium, ayant un potentiel électrochimique supérieur à 2V par rapport au couple Li/Li⁺ ;
c) un liant polymère.

L'encre obtenue est ensuite enduite sur le collecteur de courant et le ou les solvants sont évaporés par chauffage allant de 30 à 200 °C.

Les défauts de ces charges minérales sont de diminuer la quantité de matière active dans l'électrode et donc la capacité de la batterie mais également ces charges ne permettent d'améliorer que la diffusion macroscopique de l'électrolyte.

Or dans l'électrode, c'est la résistance de charge à l'interface matériau actif / électrolyte qui est limitant pour les performances de la batterie. Cette résistance est un effet microscopique qui ne peut être améliorée par l'ajout de charge minérale macroscopique.

US 2003/0094599 décrit un matériau composite de cathode comprenant notamment un additif conducteur électronique, Li₁₂V₃O₈, PEG8K, PEO600K, et du LiTFSI. US 2008/0206647 décrit un matériau composite de cathode comprenant notamment un copolymère d'oxyde d'éthylène, du V2O5, un additif conducteur, et du LiTFSI. US 2009/0017378 concerne des particules contenant notamment un oxyde métallique dans le noyau, revêtu d'un polymère, par exemple un polymère salé par au moins un sel choisi dans le groupe constitué par les sels de type LiFSI, LiTFSI, LiBETI, LiDCTA, LiBF4 et LiPF₆. FR2935382 décrit une électrode positive constituée par un mélange LiFePO4, carbone SP et PEO. Ce document mentionne également le sel organique de lithium LiTDCl, qui est un imidazolate, comme un composé ionique utile pour l'élaboration d'un électrolyte pour des batteries. Le demandeur a découvert que l'ajout d'un sel constitué d'un anion organique, choisi pour avoir une interaction favorable à la surface du matériau actif, permet d'augmenter la conductivité ionique de l'électrode.

### RESUME DE L'INVENTION

L'invention concerne en premier lieu l'utilisation de sels organiques comme additifs de conductivité ionique dans la formulation d'électrodes de batteries secondaires Li-ion, de préférence dans la formulation de cathode. Ces sels peuvent également être utilisés dans la formulation d'électrodes de batteries Na-ion.

L'invention a également pour objet l'utilisation de ladite formulation comme électrode de batteries.

L'additif de conducteur ionique doit être capable de supporter les conditions du procédé de préparation des électrodes décrit précédemment. Par exemple, le LiPF₆, le sel de lithium actuellement utilisé dans la plupart des électrolytes, de part son instabilité à la température et aux solvants nucléophiles, ne peut être utilisé comme additif de conductivité ionique.

L'invention concerne aussi un matériau composite d'électrode de batterie Li-ion, de préférence matériau d'électrode positive comprenant :
a) au moins un additif conducteur électronique à un taux allant de 1 à 5% en poids, de préférence de 1,5 à 4% ou de 1 à 2,5% en poids, de préférence de 1,5 à 2,2% en poids par rapport au poids total du matériau composite ;
b) un oxyde, un phosphate, un fluorophosphate ou un silicate de lithium comme matériau actif d'électrode capable de former de façon réversible un composé d'insertion avec le lithium, ayant un potentiel électrochimique supérieur à 2V par rapport au couple Li/Li⁺ ;
c) un liant polymère ;
d) au moins un sel organique de formule (A), 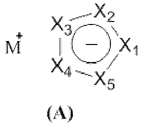 -Xi- représentant indépendamment les groupements ou atomes suivants : -N=, -N⁻-, -C(R)=, -C-(R)-, -O-, -S(=O)(R)= ou -S(R)= et R représente un groupement choisi parmi F, CN, NO₂, S-CN, N=C=S, - OCₙHₘFₚ, -CₙHₘFₚ avec n, m et p des nombres entiers, et M+ représentant un cation lithium, sodium, quaternaire ou imidazolium, les composés de formule (A) étant des imidazolates. Les composés de formule (A) particulièrement préférés sont les imidazolates représentés ci-dessous et avantageusement des imidazolates de lithium :

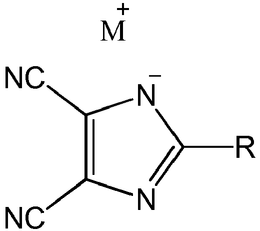

Où R représente F ou -CₙHₘFₚ. Ces sels de lithium sont particulièrement intéressants de par leur insensibilité à l'eau ce qui permet une utilisation simplifiée dans le processus de préparation de l'électrode.

Dans les formules générales ci-dessus, M⁺ représente un cation lithium, un cation sodium, un ammonium quaternaire ou un imidazolium.

De préférence, le constituant (d) peut varier entre 0,01 et 10% et avantageusement de 0,05 à 5 % en poids par rapport au poids total du matériau.

Le liant polymère est avantageusement choisi parmi polymères fluorés fonctionnalisés ou non comme le polydifluorovinyle (PVDF) ou des polymères à base aqueuse, de type Carboxyméthylcellulose ou des latex styrène-butadiène.

L'additif conducteur électronique est de préférence choisi parmi les différentes formes allotropiques du carbone ou des polymères organiques conducteurs.

### PREPARATION DE L'ELECTRODE

La présente invention a également pour objet un procédé de préparation du matériau composite d'électrode décrit ci-dessus, qui comprend
i) au moins une étape de préparation d'une suspension mettant en jeu :
   - un ou des sels organiques de formule A;
   - un additif conducteur électronique ;
   - un liant polymère ;
   - un ou plusieurs solvants volatils ;
   - un matériau actif d'électrode choisi parmi un oxyde, un phosphate, un fluorophosphate ou un silicate de lithium,
ii) et une étape d'élaboration d'un film à partir de la suspension préparée en (i).

La suspension peut être obtenue par dispersion et homogénéisation par tout moyen mécanique, par exemple à l'aide d'un rotor stator, d'une ancre d'agitation ou par ultrasons.

La suspension peut être préparée à partir du polymère à l'état pur ou sous forme d'une solution dans un ou plusieurs solvant(s) volatil(s), des sels organiques à l'état pur ou sous forme d'une suspension dans un ou plusieurs solvants volatils, de l'additif conducteur électronique et de la matière active à l'état pur, éventuellement après une étape de séchage à une température comprise entre 50 et 150°C.

De préférence, le ou les solvants volatils est ou sont choisi(s) parmi un solvant organique ou l'eau. Comme solvant organique, on peut citer notamment les solvants organiques la N-méthyle pyrrolidone (NMP) ou le diméthyle sulfoxide (DMSO).

La préparation de la suspension peut être effectuée en une seule étape ou en deux ou trois étapes successives. Lorsqu'elle est effectuée en deux étapes successives, un mode de réalisation consiste à préparer dans la première étape une dispersion contenant le solvant, le ou les sels organiques et éventuellement tout ou partie du liant polymère, à l'aide de moyens mécaniques, puis à ajouter dans une deuxième étape à cette première dispersion les autres constituants du matériau composite. Le film est ensuite obtenu à partir de la suspension à l'issue de la deuxième étape.

Lorsqu'elle est réalisée en trois étapes successives, un mode de réalisation consiste à préparer dans la première étape une dispersion contenant le ou les sels organiques et éventuellement tout ou partie du liant polymère dans un solvant, puis à ajouter dans la deuxième étape le matériau actif et à éliminer le solvant pour obtenir une poudre, ensuite à ajouter du solvant et le restant des constituants du matériau composite pour obtenir une suspension. Le film est ensuite obtenu à partir de la suspension à l'issue de la troisième étape.

La mise en solution des sels organiques de formule A peut se faire à des températures allant de 0 à 150°C de préférence entre 10 et 100°C.

Un autre objet de la présente invention est l'utilisation d'au moins un sel organique de formule A 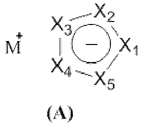 -Xi- représentant indépendamment les groupements ou atomes suivants : -N=, - N--, -C(R)=, -C⁻(R)-, -O-, -S(=O)(R)= ou -S(R)= et R représente un groupement choisi parmi F, CN, NO₂, S-CN, N=C=S, -OCₙHₘFₚ, -CₙHₘFₚ avec n, m et p des nombres entiers, et M⁺ représentant un cation lithium, sodium, quaternaire ou imidazolium, les composés de formule A étant des imidazolates, comme additif de conductivité ionique dans la fabrication d'un matériau composite d'électrode.

La présente invention a en outre pour objet des batteries Li-ion incorporant ledit matériau.

### Exemple 1 :

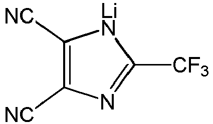

L'agitation se fait à l'aide d'un un rotor stator. Dans un flacon, mettre 0,0197 g de LiTDI (formule ci-dessus). Solubiliser avec 7,08 g de NMP, laisser agiter pendant 10 min à 25°C. Ajouter 0,1974 g de PVDF (Kynar®), laisser agiter pendant 30 min à 50°C. Ajouter ensuite 0,1982 g de carbone Super P (Timcal®) et laisser agiter pendant 2h. Enfin ajouter 4,5567 g de LiMn₂O₄ et 2,52 g de NMP et laisser agiter pendant 3h. Etaler ensuite la suspension sous forme de film avec une épaisseur de 100 µm sur une feuille d'aluminium. Laisser sécher le film pendant 5h à 130°C.

### Exemple 2 :

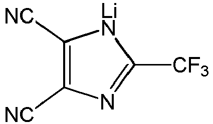

L'agitation se fait à l'aide d'un un rotor stator. Dans un flacon, mettre 0,0212 g de LiTDI. Solubiliser avec 2,84 g de NMP, laisser agiter pendant 10 min à 25°C. Ajouter 0,1063 g de PVDF (Kynar®), laisser agiter pendant 30 min à 50°C. Ajouter ensuite 0,1059 g de carbone Super P (Timcal®) et laisser agiter pendant 2h. Enfin ajouter 4,5580 g de LiNi_{1/3}Mn_{1/3}Co_{1/3}O₂ et 4,52 g de NMP et laisser agiter pendant 3h. Etaler la suspension sous forme de film avec une épaisseur de 250 µm sur une feuille d'aluminium. Laisser sécher le film pendant 8h à 130°C.

## Revendications

1. Matériau composite d'électrode de batterie, de préférence matériau d'électrode positive, comprenant :
a) au moins un additif conducteur électronique à un taux allant de 1 à 5%, de préférence de 1,5 à 4% ou de 1 à 2,5% en poids, de préférence de 1,5 à 2,2% en poids par rapport au poids total du matériau composite ;
b) un oxyde, un phosphate, un fluorophosphate ou un silicate de lithium comme matériau actif d'électrode capable de former de façon réversible un composé d'insertion avec le lithium, ayant un potentiel électrochimique supérieur à 2V par rapport au couple Li/Li⁺ ;
c) un liant polymère ;
d) au moins un sel organique de formule A, 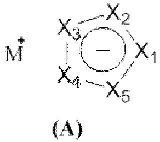 avec -Xi- dans la formule A représentant indépendamment les groupements ou atomes suivants : -N=, -N--, -C(R)=, -C-(R)-, -O-, -S(=O)(R)= ou -S(R)= avec R représentant un groupement dans le groupe constitué parmi F, CN, NO₂, S-CN, N=C=S, -OCₙHₘFₚ, -CₙHₘFₚ avec n, m et p des nombres entiers et M+ représentant un cation lithium, sodium, quaternaire ou imidazolium, les composés de formule A étant des imidazolates.

2. Matériau selon la revendication 1 **caractérisé en ce que** les composés de formule A sont des imidazolates de lithium.

3. Matériau selon la revendication 1 ou 2, **caractérisé en ce que** le ou les sel (s) organiques représente entre 0,01 et 10%, de préférence entre 0,05 et 5 % en poids par rapport au poids total du matériau.

4. Matériau selon l'une quelconque des revendications 1 à 3, **caractérisé en ce que** le liant polymère est choisi parmi les polymères fluorés, les polymères à base aqueuse ou latex styrène-butadiène.

5. Matériau selon l'une quelconque des revendications 1 à 4, **caractérisé en ce que** l'additif à conducteur électronique est choisi parmi les différentes formes allotropiques du carbone ou des polymères organiques conducteurs.

6. Procédé de préparation du matériau selon l'une quelconque des revendications 1 à 5 **caractérisé en ce qu'**il comprend (i) au moins une étape de préparation d'une suspension mettant en jeu :
- un ou des sels organiques de formule A ;
- un additif conducteur électronique ;
- un liant polymère ;
- un ou plusieurs solvants volatils ;
- un matériau actif d'électrode choisi parmi un oxyde, un phosphate, un fluorophosphate ou un silicate de lithium, et
ii) une étape d'élaboration d'un film à partir de la suspension préparée en (i).

7. Procédé selon la revendication 6, **caractérisé en ce que** le ou les solvant(s) volatil(s) est ou sont choisi(s) parmi des solvants organiques et l'eau.

8. Procédé selon la revendication 7, **caractérisé en ce que** les solvants organiques sont choisis parmi la N-méthyle pyrrolidone ou le diméthyle sulfoxide.

9. Batterie Li-ion comprenant le matériau selon l'une quelconque des revendications 1 à 5.

10. Utilisation d'au moins un sel de formule A 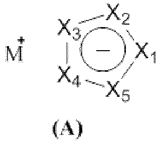 avec -Xi- dans la formule A représentant indépendamment les groupements ou atomes suivants : -N=, -N--, -C(R)=, -C-(R)-, -O-, -S(=O)(R)= ou -S(R)= avec R représentant un groupement dans le groupe constitué parmi F, CN, NO₂, S-CN, N=C=S, -OCₙHₘFₚ, -CₙHₘFₚ avec n, m et p des nombres entiers et M+ représentant un cation lithium, sodium, quaternaire ou imidazolium, les composés de formule A étant des imidazolates,
comme additif de conducteur ionique dans la fabrication d'un matériau composite d'électrode.

## Patentansprüche

1. Batterieelektroden-Verbundmaterial, vorzugsweise positives Elektrodenmaterial, umfassend:
a) mindestens ein elektronisches leitfähiges Additiv mit einem Gehalt von 1 bis 5 Gew.-%, vorzugsweise von 1,5 bis 4 Gew.-% oder von 1 bis 2,5 Gew.-%, vorzugsweise von 1,5 bis 2,2 Gew.-%, bezogen auf das Gesamtgewicht des Verbundmaterials;
b) ein Oxid, ein Phosphat, ein Fluorphosphat oder ein Silikat von Lithium als aktives Elektrodenmaterial, das reversibel eine Einlagerungsverbindung mit dem Lithium bilden kann, mit einem elektrochemischen Potential von mehr als 2 V in Bezug auf das Paar Li/Li⁺;
c) ein Polymerbindemittel;
d) mindestens ein organisches Salz der Formel A: 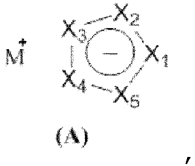 wobei -Xi- in der Formel A unabhängig die folgenden Gruppen oder Atome darstellen: -N=, -N⁻-, -C(R)=, -C⁻(R)-, -O-, -S(=O) (R) = oder -S(R)=, wobei R eine Gruppe in der Gruppe bestehend aus F, CN, NO₂, S-CN, N=C=S, -OCₙHₘFₚ, -CₙHₘFₚ darstellt, wobei n, m und p ganze Zahlen sind, und M+ ein Lithium-, Natrium-, quaternäres oder Imidazolium-Kation darstellt, wobei die Verbindungen der Formel A Imidazolate sind.

2. Material nach Anspruch 1, **dadurch gekennzeichnet, dass** die Verbindungen der Formel A Lithiumimidazolate sind.

3. Material nach Anspruch 1 oder 2, **dadurch gekennzeichnet, dass** das organische Salz oder die organischen Salze zwischen 0,01 und 10 Gew.-%, vorzugsweise zwischen 0,05 und 5 Gew.-%, bezogen auf das Gesamtgewicht des Materials ausmacht oder ausmachen.

4. Material nach einem der Ansprüche 1 bis 3, **dadurch gekennzeichnet, dass** das Polymerbindemittel aus fluorierten Polymeren, Polymeren auf der Basis von Wasser oder Styrol-Butadien-Latex ausgewählt ist.

5. Material nach einem der Ansprüche 1 bis 4, **dadurch gekennzeichnet, dass** das elektronische leitfähige Additiv aus verschiedenen allotropen Formen von Kohlenstoff oder organischen leitfähigen Polymeren ausgewählt ist.

6. Verfahren zur Herstellung des Materials nach einem der Ansprüche 1 bis 5, **dadurch gekennzeichnet, dass** dieses umfasst: (i) mindestens einen Schritt der Herstellung einer Suspension unter Verwendung:
- eines organischen Salzes oder organischer Salze der Formel A;
- eines elektronischen leitfähigen Additivs;
- eines Polymerbindemittels;
- eines oder mehrerer flüchtiger Lösungsmittel;
- eines aktiven Elektrodenmaterials, ausgewählt aus einem Oxid, einem Phosphat, einem Fluorphosphat oder einem Silikat von Lithium; und
(ii) einen Schritt der Herstellung eines Films aus der in (i) hergestellten Suspension.

7. Verfahren nach Anspruch 6, **dadurch gekennzeichnet, dass** das flüchtige Lösungsmittel oder die flüchtigen Lösungsmittel aus organischen Lösungsmitteln und Wasser ausgewählt wird oder werden.

8. Verfahren nach Anspruch 7, **dadurch gekennzeichnet, dass** die organischen Lösungsmittel aus N-Methylpyrrolidon oder Dimethylsulfoxid ausgewählt werden.

9. Li-Ionen-Batterie, umfassend das Material nach einem der Ansprüche 1 bis 5.

10. Verwendung mindestens eines Salzes der Formel A: 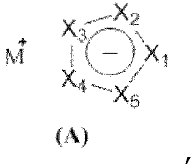 wobei -Xi- in der Formel A unabhängig die folgenden Gruppen oder Atome darstellen: -N=, -N⁻-, -C(R)=, -C⁻(R)-, -0-, -S(=O) (R) = oder -S(R)=, wobei R eine Gruppe in der Gruppe bestehend aus F, CN, NO₂, S-CN, N=C=S, -OCₙHₘFₚ, -CₙHₘFₚ darstellt, wobei n, m und p ganze Zahlen sind, und M+ ein Lithium-, Natrium-, quaternäres oder Imidazolium-Kation darstellt, wobei die Verbindungen der Formel A Imidazolate sind,
als leitfähiges ionisches Additiv bei der Herstellung eines Elektrodenverbundmaterials.

## Claims

1. Battery electrode composite material, preferably a positive electrode material, comprising:
a) at least one electron-conducting additive at a content ranging from 1 to 5%, preferably from 1.5 to 4% or 1 to 2.5% by weight, preferably from 1.5 to 2.2% by weight, with respect to the total weight of the composite material;
b) a lithium oxide, phosphate, fluorophosphate or silicate as electrode active material capable of reversibly forming an insertion compound with lithium, having an electrochemical potential greater than 2V with respect to the Li/Li⁺ pair;
c) a polymer binder,
d) at least one organic salt of formula A: 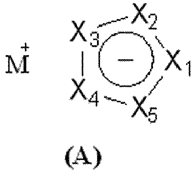 with -Xᵢ- in the formula A independently representing the following groups or atoms: -N=, - N⁻-, -C(R)=, -C⁻(R)-, -O-, -S(=O) (R) = or -S(R)= with R representing a group from the group consisting of F, CN, NO₂, S-CN, N=C=S, -OCₙHₘFₚ and -CₙHₘFₚ with n, m and p integers, and M⁺ representing a lithium, sodium, quaternary or imidazolium cation, the compounds of formula A being imidazolates.

2. Material according to Claim 1, **characterized in that** the compounds of formula A are lithium imidazolates.

3. Material according to Claim 1 or 2, **characterized in that** the organic salt(s) represents between 0.01 and 10% and preferably between 0.05 and 5% by weight, with respect to the total weight of the material.

4. Material according to any one of Claims 1 to 3, **characterized in that** the polymer binder is chosen from fluoropolymers, aqueous-based polymers or styrene/butadiene latexes.

5. Material according to any one of Claims 1 to 4, **characterized in that** the electron-conducting additive is chosen from the different allotropic forms of carbon or conducting organic polymers.

6. Process for the preparation of the material according to any one of Claims 1 to 5, **characterized in that** it comprises:
(i) at least a stage of preparation of a suspension involving:
- one or more organic salts of formula A;
- an electron-conducting additive;
- a polymer binder;
- one or more volatile solvents;
- an electrode active material chosen from a lithium oxide, phosphate, fluorophosphate or silicate, and
ii) a stage of preparation of a film starting from the suspension prepared in (i).

7. Process according to Claim 6, **characterized in that** the volatile solvent(s) is or are chosen from organic solvents and water.

8. Process according to Claim 7, **characterized in that** the organic solvents are chosen from N-methylpyrrolidone or dimethyl sulfoxide.

9. Li-ion battery comprising the material according to any one of Claims 1 to 5.

10. Use of at least one salt of formula A: 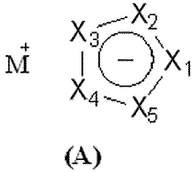 with -Xᵢ- in the formula A independently representing the following groups or atoms: -N=, - N⁻-, -C(R)=, -C⁻(R)-, -O-, -S (=O) (R) = or -S (R) = with R representing a group from the group consisting of F, CN, NO₂, S-CN, N=C=S, -OCₙHₘFₚ and -CₙHₘFₚ with n, m and p integers, and M⁺ representing a lithium, sodium, quaternary or imidazolium cation, the compounds of formula A being imidazolates,
as ionic-conducting additive in the manufacture of an electrode composite material.
